(19) Europäisches Patentamt
European Patent Office
Office européen des brevets

(11) EP 4 174 099 A1

(12) **EUROPEAN PATENT APPLICATION**
published in accordance with Art. 153(4) EPC

(43) Date of publication:
**03.05.2023 Bulletin 2023/18**

(21) Application number: **21861762.9**

(22) Date of filing: **31.08.2021**

(51) International Patent Classification (IPC):
***C08G 14/073*** (2006.01) ***C09B 69/10*** (2006.01)
***C08L 61/34*** (2006.01) ***C09D 11/037*** (2014.01)
***G02B 5/20*** (2006.01) ***G02B 5/22*** (2006.01)
***C09B 67/20*** (2006.01)

(52) Cooperative Patent Classification (CPC):
**C08G 14/06; C08L 61/34; C09B 67/006; C09B 69/10; C09D 11/037; G02B 5/20; G02B 5/22**

(86) International application number:
**PCT/JP2021/031817**

(87) International publication number:
**WO 2022/045341 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020 JP 2020145902**

(71) Applicant: **SEKISUI CHEMICAL CO., LTD.**
**530-0047 (JP)**

(72) Inventors:
- **SUEMATSU, Mikitoshi**
  **Mishima-gun, Osaka 618-0021 (JP)**
- **SUN, Ren-de**
  **Mishima-gun, Osaka 618-0021 (JP)**
- **FUKUI, Hiroji**
  **Mishima-gun, Osaka 618-0021 (JP)**
- **ISHII, Masahiro**
  **Mishima-gun, Osaka 618-0021 (JP)**

(74) Representative: **Cabinet Beau de Loménie**
**158, rue de l'Université**
**75340 Paris Cedex 07 (FR)**

(54) **NEAR-INFRARED LIGHT TRANSMITTING BLACK MATERIAL**

(57) The present invention provides a near-infrared transmitting black material that can sufficiently absorb visible light and sufficiently inhibit the absorption of near-infrared light. Provided is a near-infrared transmitting black material containing an oxazine resin.

EP 4 174 099 A1

## Description

TECHNICAL FIELD

The present invention relates to a near-infrared transmitting black material that can sufficiently absorb visible light and sufficiently inhibit the absorption of near-infrared light.

BACKGROUND ART

The recent development of lasers, especially semiconductor lasers and sensors for them, has increased the fields which require functional pigments with optical properties not found in conventionally used pigments. For example, in the field of printing inks, there is a need for infrared transmitting pigments that can be used for purposes such as printing hidden bar codes and hidden two-dimensional codes. The hidden bar codes and hidden two-dimensional codes are printed with inks containing infrared transmitting pigments to allow information that cannot be distinguished by the naked eye to be read with an infrared reader.
For example, Patent Literature 1 discloses an infrared transmitting ink containing a magnetic material, a color pigment, and a varnish. Such an ink is said to have excellent confidentiality.
However, the ink disclosed in Patent Literature 1 disadvantageously has an insufficient effect of inhibiting the absorption of near-infrared light.
Infrared transmitting pigments are also used in color filters. Color filters are essential components for solid-state imaging elements and liquid crystal displays. In particular, color filters for solid-state imaging elements require improvement in color resolution and color reproducibility.
As such color filters, for example, Patent Literature 2 discloses a color filter composition containing a near-infrared transmitting black color material such as bisbenzofuranone pigments. Such a composition is said to have less noise derived from visible light components.
However, even the near-infrared transmitting black color material of Patent Literature 2 disadvantageously has an insufficient effect of absorbing visible light or cannot sufficiently inhibit the absorption of near-infrared light.

CITATION LIST

- Patent Literature

Patent Literature 1: JP 2015-196819 A
Patent Literature 2: JP 2014-130173 A

SUMMARY OF INVENTION

- Technical Problem

The present invention was made in view of the above situation. The present invention aims to provide a near-infrared transmitting black material that can sufficiently absorb visible light and sufficiently inhibit the absorption of near-infrared light.

- Solution to Problem

The present invention relates to a near-infrared transmitting black material containing an oxazine resin.
The present invention is described in detail below.
The present inventors made intensive studies to find out that oxazine resins have high transmittance in the infrared region while exhibiting a brown to black color, completing the present invention.
The near-infrared transmitting black material of the present invention contains an oxazine resin.
Containing the oxazine resin, the black material can achieve both absorption of visible light and inhibition of near-infrared absorption.
The oxazine resin is preferably an aromatic oxazine resin having an aromatic ring.
Examples of the aromatic oxazine resin include a benzoxazine resin having a benzene ring in the basic structure of the resin and a naphthoxazine resin having a naphthalene ring in the basic structure of the resin.
Preferred among these is a naphthoxazine resin showing high visible light absorption and higher blackness.

The benzoxazine resin may have multiple benzene rings in the repeating unit. The naphthoxazine resin may also have multiple naphthalene rings in the repeating unit.

The oxazine resin is prepared by ring-opening polymerization of its precursor, oxazine.

The structures of aromatic oxazines are shown below as examples of the structure of the oxazine. The following formula (1) shows an exemplary partial structure of benzoxazine. The following formulas (2) and (3) each show an exemplary partial structure of naphthoxazine.

[Chem. 1]

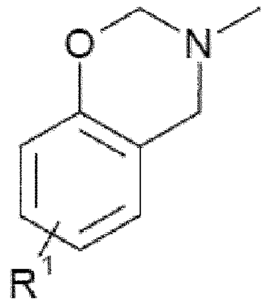

・・・(1)

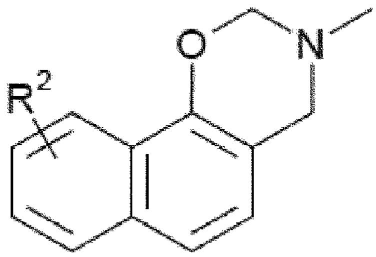

・・・(2)

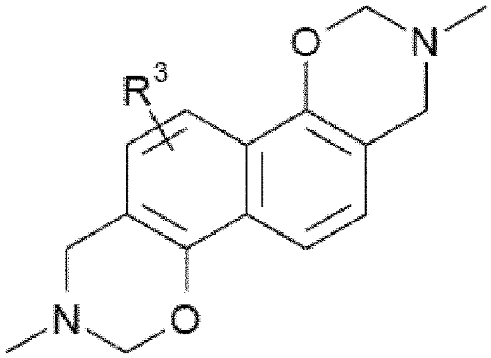

・・・(3)

$R^1$ in the formula (1), $R^2$ in the formula (2), and $R^3$ in the formula (3) each independently represent a hydrogen atom, a hydroxy group, a halogen atom, an alkyl group, or an alkoxy group.

Examples of the halogen atom include fluorine, chlorine, bromine, and iodine atoms.

Examples of the alkyl group include methyl, ethyl, n-propyl, isopropyl, n-butyl, isobutyl, and t-butyl groups.

Examples of the alkoxy group include methoxy, ethoxy, n-propoxy, isopropoxy, n-butoxy, isobutoxy, and t-butoxy groups.

The aromatic oxazine has a six-membered ring added to a benzene or naphthalene ring. The six-membered ring contains oxygen and nitrogen and hence the name "oxazine".

The following formulas (4) to (6) show examples of repeating units of oxazine resins obtained by ring-opening polymerization of the aromatic oxazines.

[Chem. 2]

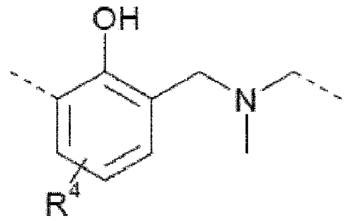

· · · (4)

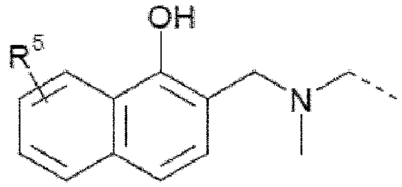

· · · (5)

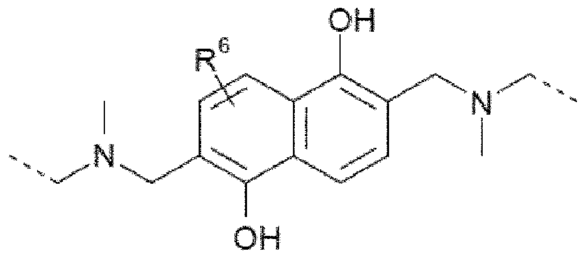

(6)

$R^4$ in the formula (4), $R^5$ in the formula (5), and $R^6$ in the formula (6) each independently represent a hydrogen atom, a hydroxy group, a halogen atom, an alkyl group, or an alkoxy group.

Examples of the halogen atom include fluorine, chlorine, bromine, and iodine atoms.

Examples of the alkyl group include methyl, ethyl, n-propyl, isopropyl, n-butyl, isobutyl, and t-butyl groups.

Examples of the alkoxy group include methoxy, ethoxy, n-propoxy, isopropoxy, n-butoxy, isobutoxy, and t-butoxy groups.

The oxazine resin preferably has an oxygen content of 5.0% by weight or more, more preferably 10.0% by weight or more, and preferably 50.0% by weight or less, more preferably 40.0% by weight or less.

The oxazine resin preferably has a nitrogen content of 0.5% by weight or more, more preferably 1.0% by weight or more, and preferably 20.0% by weight or less, more preferably 10.0% by weight or less.

The oxygen content and nitrogen content can be measured, for example, by X-ray photoelectron spectroscopy.

The weight ratio of carbon to oxygen (carbon/oxygen) in the oxazine resin is preferably 1.0 or more, more preferably 2.0 or more, and preferably 30.0 or less, more preferably 25.0 or less.

The weight ratio of carbon to nitrogen (carbon/nitrogen) in the oxazine resin is preferably 2.5 or more, more preferably 5.0 or more, and preferably 100.0 or less, more preferably 50.0 or less.

The weight ratios carbon/oxygen and carbon/nitrogen can be measured, for example, by X-ray photoelectron spectroscopy.

Examples of a method for producing the oxazine resin include a method including reacting a mixed solution containing triazine, dihydroxynaphthalene, and a solvent, and a method including reacting a mixed solution containing formaldehyde, an aliphatic amine, dihydroxynaphthalene, and a solvent. A naphthoxazine resin can be produced by any of the above methods.

A benzoxazine resin can be produced by using a phenol (e.g., phenol, bisphenol) instead of dihydroxynaphthalene in any of the above methods.

In the methods for producing a naphthoxazine resin, a mixed solution is first prepared, such as a mixed solution containing triazine, dihydroxynaphthalene, and a solvent or a mixed solution containing formaldehyde, an aliphatic amine, dihydroxynaphthalene, and a solvent.

Since the formaldehyde is unstable, formalin, a formaldehyde solution, is preferably used. Formalin usually contains, in addition to formaldehyde and water, a small amount of methanol as a stabilizer. Formaldehyde used in the present invention may be formalin, as long as the formaldehyde content is clear.

Paraformaldehyde is a polymerized form of formaldehyde and can also be used as a raw material. Still, since paraformaldehyde is less reactive, formalin mentioned above is preferably used.

The aliphatic amine is represented by the formula $R-NH_2$ where R is preferably an alkyl group having a carbon number of 5 or less. Examples of the alkyl group having a carbon number of 5 or less include methyl, ethyl, n-propyl, isopropyl, cyclopropyl, n-butyl, isobutyl, s-butyl, t-butyl, cyclobutyl, cyclopropylmethyl, n-pentyl, cyclopentyl, cyclopropylethyl, and cyclobutylmethyl groups.

Since a smaller molecular weight is preferred, the substituent R is preferably a methyl group, an ethyl group, a propyl group, or the like. Preferred examples of actual compounds thereof include methylamine, ethylamine, and propylamine. The most preferred one is methylamine, which has the smallest molecular weight.

The dihydroxynaphthalene has many isomers. Examples thereof include 1,3-dihydroxynaphthalene, 1,5-dihydroxynaphthalene, 1,6-dihydroxynaphthalene, 1,7-dihydroxynaphthalene, 2,3-dihydroxynaphthalene, 2,6-dihydroxynaphthalene, and 2,7-dihydroxynaphthalene.

Preferred among these are 1,5-dihydroxynaphthalene and 2,6-dihydroxynaphthalene for their high reactivity. More preferred is 1,5-dihydroxynaphthalene because it has the highest reactivity.

In the method of adding formaldehyde and an aliphatic amine without adding the triazine, the ratio of the three components including dihydroxynaphthalene, an aliphatic amine, and formaldehyde in the mixed solution is most preferably 1 mole of aliphatic amine and 2 moles of formaldehyde per 1 mol of dihydroxynaphthalene.

Since raw materials may be lost due to volatilization or the like during the reaction depending on the reaction conditions, the optimum blending ratio may not be exactly the above ratio. Still, the three components are preferably blended in the range of 0.8 to 2.2 moles of aliphatic amine and 1.6 to 4.4 moles of formaldehyde per 1 mole of dihydroxynaphthalene.

When the amount of the aliphatic amine is set to 0.8 moles or more, an oxazine ring can be sufficiently formed and the polymerization can suitably proceed. When the amount of the aliphatic amine is set to 2.2 moles or less, the reaction does not excessively consume formaldehyde, and therefore the reaction proceeds smoothly and the desired naphthoxazine can be obtained.

Similarly, when the amount of formaldehyde is set to 1.6 moles or more, an oxazine ring can be sufficiently formed and the polymerization can suitably proceed. When the amount of formaldehyde is set to 4.4 moles or less, the occurrence of side reactions is favorably reduced.

The mixed solution contains a solvent to dissolve and react the above two or three raw materials.

Examples of the solvent include alcohols (e.g., methanol, ethanol, isopropanol), ketones (e.g., acetone, methyl ethyl ketone), tetrahydrofuran, dioxane, chloroform, ethyl acetate, dimethyl formamide, and dimethyl sulfoxide.

The solvent used may be a single-component solvent or a solvent mixture containing two or more solvents. The solvent used preferably has a solubility parameter (SP value) of 9.0 or higher.

Examples of the solvent having an SP value of 9.0 or higher include ethanol (12.7), methanol (14.7), isopropanol (11.5), cresol (13.3), ethylene glycol (14.2), phenol (14.5), water (23.4), N,N-dimethylformamide (DMF, 12.3), dimethyl sulfoxide (DMSO, 13.0), methyl ethyl ketone (9.3), dioxane (10.3), ethyl acetate (9.0), chloroform (9.4), and acetone (10.0).

The solvent having an SP value of 9.0 or higher is more preferably a solvent having an SP value of 9.0 to 15.0. When the solvent used contains a single component alone, the boiling point is preferably 50°C to 150°C. Still more preferred is a solvent having a boiling point of 50°C to 130°C and an SP value of 9.0 or higher.

When the solvent is a solvent mixture containing two or more solvents, the solvent mixture preferably contains a solvent having a boiling point of 150°C or higher in an amount of 60% by volume or less. Use of such a solvent enables production of a black material having high average sphericity.

The lower limit of the amount of the solvent having a boiling point of 150°C or higher is more preferably 45% by volume.

The amount of the solvent in the mixed solution is not limited. Still, when the amount of the raw materials (solute) including dihydroxynaphthalene, triazine, an aliphatic amine, and formaldehyde is 100 parts by mass, the amount of the solvent added is normally preferably 300 to 200,000 parts by mass (equivalent to a molar concentration of the solute of 1.0 M to 0.001 M). When the amount of the solvent is 300 parts by mass or more, the solubility of the solute increases. When the amount of the solvent is 200,000 parts by mass or less, the concentration is appropriate, which promotes the reaction.

The method for producing an oxazine resin includes reacting the mixed solution. The reaction proceeds to form an oxazine resin.

In the reaction, the oxazine ring formed is opened by continuous heating, and the molecular weight increases when polymerization occurs. Thus, a so-called oxazine resin is obtained.

For uniform production of particles, the particles are preferably dispersed during the reaction. A known method may be employed for dispersion, such as stirring, sonication, or rotation. An appropriate dispersant may also be added to improve the dispersion state.

In the production of an oxazine resin, the reaction proceeds gradually even at room temperature. For efficient proceeding, the reaction is preferably performed at a temperature of 50°C to 150°C. The reaction time can be adjusted depending on the temperature and is normally preferably 30 minutes to 20 hours. The reaction under the above conditions produces spherical oxazine resin particles. The oxazine resin particles obtained in this process are green, brown, or black, depending on the reaction conditions.

The particle size of oxazine resin particles can be adjusted by parameters such as the solution concentration, reaction temperature, molar ratio of raw materials, and stirring conditions.

The ring-opening polymerization of oxazine is accelerated by heating. The oxazine resin particles obtained after the reaction are therefore preferably heat-treated at 100°C to 300°C, more preferably at 150°C to 250°C for sufficient proceeding of the polymerization. The heating time is preferably 30 minutes to 50 hours.

The heating is preferably performed in an inert gas atmosphere such as nitrogen or argon gas atmosphere in a closed container to reduce evaporation.

The near-infrared transmitting black material of the present invention may contain a binder resin, a UV absorber, a dispersant, or the like in addition to the oxazine resin.

The near-infrared transmitting black material of the present invention has an average transmittance of 20% or lower in a visible light range of 400 to 800 nm wavelength.

The average transmittance within the above range enables sufficient absorption of visible light and development of high blackness.

The average transmittance is more preferably 15% or lower, still more preferably 12% or lower.

The average transmittance can be measured, for example, using a spectrophotometer equipped with an integrating sphere.

The near-infrared transmitting black material of the present invention has an average transmittance of 60% or higher in a near-infrared region of 900 to 2,500 nm wavelength.

The average transmittance within the above range enables sufficient enhancement of near-infrared transmission.

The average transmittance is more preferably 70% or higher.

The average transmittance can be measured, for example, using a spectrophotometer equipped with an integrating sphere.

The near-infrared transmitting black material of the present invention preferably has a zeta potential (surface potential) of -70 to +80 mV.

The black material having a zeta potential within the above range can have excellent particle size uniformity to have good dispersibility in a solvent.

The lower limit of the zeta potential is preferably - 60 mV and the upper limit thereof is preferably +70 mV.

The zeta potential can be determined using, for example, a micro-electrophoresis zeta potential analyzer. A solution containing the black particles dispersed therein is poured into a measurement cell, and a voltage is applied thereto under microscopic observation. The potential at which particles stop moving (stand still) is the zeta potential.

The near-infrared transmitting black material of the present invention preferably has a density of 1.80 $g/cm^3$ or less.

With the density of 1.80 $g/cm^3$ or less, the black material can achieve high dispersibility. The lower limit of the density is preferably 1.20 $g/cm^3$ and the upper limit thereof is preferably 1.70 $g/cm^3$.

The near-infrared transmitting black material of the present invention preferably has a volume resistivity of $1.0 \times 10^7$ Ω·cm or more.

The volume resistivity of $1.0 \times 10^7$ Ω·cm or more ensures high insulation properties. The volume resistivity is more preferably $1.0 \times 10^8$ Ω·cm or more, still more preferably $1.0 \times 10^{11}$ Ω·cm or more. The upper limit of the volume resistivity is preferably $1.0 \times 10^{18}$ Ω·cm.

In analysis of the near-infrared transmitting black material of the present invention by time-of-flight secondary ion mass spectrometry (TOF-SIMS), at least one of a mass spectrum derived from a benzene ring or a mass spectrum derived from a naphthalene ring is preferably detected.

With such a structure, the particles can be highly dense.

In the present invention, the mass spectrum derived from a benzene ring refers to a mass spectrum at around 77.12 and the mass spectrum derived from a naphthalene ring refers to a mass spectrum at around 127.27.

The analysis can be performed using, for example, a TOF-SIMS apparatus (available from ION-TOF GmbH).

The near-infrared transmitting black material of the present invention may have any shape such as a particulate, plate, or liquid shape. Preferred among these is a particulate shape.

When the near-infrared transmitting black material of the present invention has a particulate shape, the average particle size is preferably 0.01 um or larger and 10.0 um or smaller.

Having the average particle size within the above range, the black material can have sufficient blackness and high dispersibility.

The average particle size is more preferably 0.02 um or larger and 5.0 um or smaller.

The near-infrared transmitting black material of the present invention preferably has a coefficient of variation (CV value) of the particle size of 20% or lower.

When the CV value of the particle size is 20% or lower, the black material has better monodispersibility, which facilitates close packing of the particles when used as a black pigment. As a result, the effect of blocking visible light can be increased. The upper limit of the CV value of the particle size is more preferably 15%. The lower limit is not limited, and is preferably 0.5%.

The CV value (%) of the particle size is a value in percentage obtained by dividing the standard deviation by the average particle size, i.e., the numerical value obtained by the following equation. A smaller CV value means less variation in particle size.

$$\text{CV value (\%) of particle size} = (\text{standard deviation of particle size}/\text{average particle size}) \times 100$$

The average particle size and standard deviation can be measured, for example, with a FE-TEM.

The near-infrared transmitting black material of the present invention preferably has an average sphericity of 90% or higher.

With such an average sphericity, the effect of the present invention is better obtained.

The lower limit of the average sphericity is more preferably 95%.

The sphericity (breadth/length) can be determined by analyzing an electron micrograph taken with a FE-TEM or FE-SEM using an image analyzer. The average sphericity can be calculated by obtaining the average of sphericity values of, for example, arbitrary selected 100 particles in the electron micrograph.

The near-infrared transmitting black material of the present invention preferably has a lightness value L* of 30 or less in the CIE LAB (L*a*b*) color system.

With the lightness value L* within the above range, the black material can develop high blackness.

The lightness value L* is more preferably 25 or less, still more preferably 20 or less.

The lightness value L* can be measured, for example, using a spectrophotometer in accordance with JIS Z 87 22:2009.

Examples of a method for producing the near-infrared transmitting black material of the present invention include the same methods as those for producing an oxazine resin described above.

The near-infrared transmitting black material of the present invention can be used for applications such as near-infrared transmitting inks (e.g., coating films, black coating materials, and anti-counterfeiting inks), near-infrared transmitting filters (e.g., black matrix for color filters), and near-infrared transmitting films.

The present invention also encompasses the near-infrared transmitting inks and the near-infrared transmitting filters.

- Advantageous Effects of Invention

The present invention can provide a near-infrared transmitting black material that can sufficiently absorb visible light and sufficiently inhibit the absorption of near-infrared light.

## DESCRIPTION OF EMBODIMENTS

Embodiments of the present invention are more specifically described with reference to, but not limited to, examples below.

(Example 1)

First, 1.20 g of 1,5-dihydroxynaphthalene (1,5-DHN, available from Tokyo Chemical Industry Co., Ltd.) and 0.98 g of 1,3,5-trimethylhexahydro-1,3,5-triazine (available from Tokyo Chemical Industry Co., Ltd.) were sequentially dissolved in 50 ml of ethanol to prepare a mixed solution in ethanol.

Next, the obtained mixed solution was stirred under heat at 80°C for 5.0 hours (rotation rate: 300 rpm). The solution was filtered through a glass filter, and the obtained particles were washed with ethanol three times and vacuum-dried at 50°C for three hours, followed by vacuum-heating at 200°C for 12 hours. Thus, naphthoxazine resin particles as a near-infrared transmitting black material were obtained.

Four parts by weight of the obtained black material was dispersed in 40 parts by weight of polyvinyl butyral resin, and applied to a glass slide to a thickness after drying of 30 um, followed by drying at 100°C for two hours. Thus, a coating film was obtained.

(Example 2)

First, 1.0 g of 1,5-dihydroxynaphthalene (available from Tokyo Chemical Industry Co., Ltd.), 0.5 g of 40% methylamine (available from FUJIFILM Wako Pure Chemicals Co., Ltd.), and 1.0 g of a 37% formaldehyde solution (available from FUJIFILM Wako Pure Chemicals Co., Ltd.) were sequentially dissolved in 500 ml of a mixed solution of isopropanol and water (weight ratio of isopropanol to water = 4:1).

Next, the obtained mixed solution was reacted at 30°C overnight, and then stirred under heat at 80°C for 10 hours (rotation rate: 300 rpm). The particles were collected, washed, and vacuum-dried at 50°C for three hours, followed by heat treatment at 220°C for 20 hours. Thus, naphthoxazine resin particles as a near-infrared transmitting black material

were obtained.

A coating film was produced as in Example 1, except that the obtained black material was used.

(Comparative Example 1)

A coating film was produced as in Example 1, except that carbon black was used.

(Evaluation method)

(1) Average particle size, CV value, and average sphericity

The average sphericities were determined by analyzing FE-SEM images of the black materials obtained in the examples and of the carbon black used in the comparative example using image analysis software (WINROOF, Mitani Corporation).

The standard deviation was calculated for the black materials obtained in the examples. Based on the obtained values, the coefficients of variation (CV value) of the particle size were calculated.

The sphericities of the black materials obtained in the examples were determined based on the ratio of the smallest diameter to the largest diameter of particles, and the average sphericities were calculated.

(2) Average transmittance and lightness L*

The coating films obtained in the examples and comparative example were subjected to measurement of the reflectance spectra in the visible light region of 400 to 800 nm wavelength and in the near-infrared region of 90 to 2,500 nm wavelength using a spectrophotometer equipped with an integrating sphere (V-670, available from Jasco Corporation). The geometric average of the transmittance in each wavelength range was determined as the average value of the transmittance in each wavelength range. Thus, the average transmittance was determined.

The coating films obtained in the examples and comparative example were subjected to measurement of lightness values L* in the LAB (L*a*b*) color system using a spectrophotometer equipped with an integrating sphere (V-670, Jasco Corporation) in accordance with JIS Z 8722:2009.

[Table 1]

| | Near-inf rared transmitting material | | | | Evaluation | | | | | | | | | | |
|---|---|---|---|---|---|---|---|---|---|---|---|---|---|---|---|
| | | | | | L* | Tran smittance light in range visible (%) | | | | Trans mittance in near-infrared range (%) | | | | | |
| | Material | Average particle size (μm) | CV value of particle size (%) | Average sphericity (%) | | Wavlength (nm) | | | Average | Wavelength (nm) | | | | | Average |
| | | | | | | 400 | 550 | 800 | | 850 | 950 | 1200 | 1800 | 2400 | |
| Example 1 | Naphthoxazine resin | 5 | 20 | 90 | 9.2 | 0.2 | 0.21 | 5.31 | 0.64 | 42.7 | 51.3 | 81.5 | 85.1 | 63.2 | 67.4 |
| Example 2 | Naphthoxazine resin | 0.3 | 25 | 95 | 12.2 | 0.22 | 0.85 | 35 | 7.4 | 50 | 60.2 | 90.8 | 90.7 | 85.6 | 84.8 |
| Comparative Example 1 | Carbon black | 0.02 | - | - | 2.96 | 0.09 | 0.31 | 0.71 | 0.38 | 0.83 | 1.02 | 1.56 | 2.85 | 3.89 | 2.54 |

INDUSTRIAL APPLICABILITY

The present invention can provide a near-infrared transmitting black material that can sufficiently absorb visible light and sufficiently inhibit the absorption of near-infrared light.

## Claims

**1.** A near-infrared transmitting black material comprising an oxazine resin.

**2.** The near-infrared transmitting black material according to claim 1, wherein the oxazine resin is a naphthoxazine resin.

**3.** The near-infrared transmitting black material according to claim 1 or 2, wherein the black material has a particulate shape with an average particle size of 0.02 um or larger and 10.0 um or smaller.

**4.** The near-infrared transmitting black material according to any one of claims 1 to 3, wherein the black material has an average transmittance of 20% or lower in a visible light region of 400 to 800 nm wavelength and an average transmittance of 60% or higher in a near-infrared region of 900 to 2,500 nm wavelength.

**5.** A near-infrared transmitting ink comprising the near-infrared transmitting black material according to any one of claims 1 to 4.

**6.** A near-infrared transmitting filter comprising the near-infrared transmitting black material according to any one of claims 1 to 4.

## INTERNATIONAL SEARCH REPORT

International application No.
**PCT/JP2021/031817**

**A. CLASSIFICATION OF SUBJECT MATTER**

***C08G 14/073***(2006.01)i; ***C09B 69/10***(2006.01)i; ***C08L 61/34***(2006.01)i; ***C09D 11/037***(2014.01)i; ***G02B 5/20***(2006.01)i; ***G02B 5/22***(2006.01)i; ***C09B 67/20***(2006.01)i
FI: G02B5/22; G02B5/20 101; C09D11/037; C09B67/20 F; C09B69/10 B; C08G14/073; C08L61/34

According to International Patent Classification (IPC) or to both national classification and IPC

**B. FIELDS SEARCHED**

Minimum documentation searched (classification system followed by classification symbols)

C08G14/073; C09B69/10; C08L61/34; C09D11/037; G02B5/20; G02B5/22; C09B67/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | HANO, Nanami et al. Monodisperse Surface-Charge-Controlled Black Nanoparticles for Near-Infrared Shielding. ACS Appl. Nano Mater. 29 April 2019, vol. 2, pp. 3597-3605<br>pp. 3597, 3602, 3604, fig. 4, 5 | 1-6 |
| X<br><br><br>A | JP 2016-014094 A (TOKYO INSTITUTE OF TECHNOLOGY) 28 January 2016 (2016-01-28)<br>claims, paragraph [0027], fig. 8, 9 | 1<br><br><br>2-5 |
| A | WO 2020/171168 A1 (SEKISUI CHEMICAL COMPANY LIMITED) 27 August 2020 (2020-08-27)<br>entire text | 1-6 |
| A | WO 2017/142087 A1 (SEKISUI CHEMICAL COMPANY LIMITED) 24 August 2017 (2017-08-24)<br>entire text, all drawings | 1-6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 October 2021** | **26 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

**INTERNATIONAL SEARCH REPORT**

International application No.
**PCT/JP2021/031817**

**C. DOCUMENTS CONSIDERED TO BE RELEVANT**

| Category* | Citation of document, with indication, where appropriate, of the relevant passages | Relevant to claim No. |
|---|---|---|
| A | CN 102225996 A (DALIAN UNIVERSITY OF TECHNOLOGY) 26 October 2011 (2011-10-26) entire text, all drawings | 1-6 |
| A | MURAKAMI, Akiko et al. Non-conductive, Size-controlled Monodisperse Black Particles Prepared by a One-pot Polymerization and Low-temperature Calcination. Chemistry Letters. 05 May 2017, vol. 46, pp. 680-682 entire text, all drawings | 1-6 |

Form PCT/ISA/210 (second sheet) (January 2015)

**INTERNATIONAL SEARCH REPORT**
**Information on patent family members**

International application No.
**PCT/JP2021/031817**

| Patent document cited in search report | Publication date (day/month/year) | Patent family member(s) | Publication date (day/month/year) |
|---|---|---|---|
| JP 2016-014094 A | 28 January 2016 | (Family: none) | |
| WO 2020/171168 A1 | 27 August 2020 | CN 113439109 A | |
| WO 2017/142087 A1 | 24 August 2017 | US 2018/0354798 A1<br>entire text, all drawings<br>EP 3418334 A1<br>CN 107949606 A<br>KR 10-2018-0115664 A<br>TW 201733788 A | |
| CN 102225996 A | 26 October 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015196819 A
- JP 2014130173 A